# EUROPÄISCHE PATENTSCHRIFT

(11) **EP 3 326 266 B1**
(45) Veröffentlichungstag und Bekanntmachung des Hinweises auf die Patenterteilung: **22.04.2020**
(21) Anmeldenummer: 17748665.1
(22) Anmeldetag: 18.07.2017
(51) Int. Cl.: H02K 1/02, H02K 3/47

(54) **HOCHGESCHWINDIGKEITSMOTOR MIT LUFTSPALTWICKLUNG**
HIGH-SPEED MOTOR WITH AIR GAP WINDING
MOTEUR À VITESSE ÉLEVÉE AVEC ENROULEMENT À ENTREFER

(30) Priorität: 21.07.2016 DE 102016113437
(43) Veröffentlichungstag der Anmeldung: 30.05.2018
(73) Patentinhaber: EBM-Papst Mulfingen GmbH&CO. KG, 74673 Mulfingen (DE)
(72) Erfinder: HUTH, Gerhard, 97618 Hohenroth-Leutershausen (DE); HE, Jiawei, 67663 Kaiserslautern (DE); BAUN, Martin, 74673 Mulfingen (DE); ERNEKER, Roland, 74653 Künzelsau-Amrichhausen (DE); HÜGEL, Otmar, 74653 Künzelsau (DE); HOFMANN, Walter, 74673 Mulfingen-Ailringen (DE)
(74) Vertreter: Staeger & Sperling Partnerschaftsgesellschaft mbB
(86) Internationale Anmeldenummer: PCT/EP2017/068143
(87) Internationale Veröffentlichungsnummer: WO 2018/015394

(56) Entgegenhaltungen:
- WO-A1-01/13494
- DE-A1-102008 060 896
- PERSSON M ET AL: "Soft magnetic composite materials-use for electrical machines", ELECTRICAL MACHINES AND DRIVES, 1995. SEVENTH INTERNATIONAL CONFERENCE ON DURHAM, LONDON, UK,IEE, UK, 1. Oktober 1995 (1995-10-01), Seiten 242-246, XP006529593, DOI: 10.1049/CP:19950871 ISBN: 978-0-85296-648-8

## Beschreibung

Die Erfindung betrifft eine Drehfeldmaschine mit Luftspaltwicklung für hohe Drehgeschwindigkeiten, insbesondere einen Hochgeschwindigkeitsmotor mit Luftspaltwicklung.

Im Stand der Technik sind eine Vielzahl von Elektromotoren mit unterschiedlichster Ausführung von Ständern und Ständerpaketen mit Wicklungen bekannt. So ist z. B. bei bürsten losen Gleichstrommotoren (BLDC-Motoren) die sogenannte Luftspaltwicklung mit freitragenden Wickelkörpern bekannt.

Typischerweise wird die Wicklung für einen derartigen Wickelkörper zuerst auf einen Dorn aufgebracht, welcher die Spulen während des Wickelvorgangs trägt und in Position hält. Dann wird die typischerweise aus Backlackdraht bestehende Wicklung durch Erhitzen und Verpressen in ihre endgültige Form gebracht, welche der Wickelkörper nach dem Erhitzen beibehält. Anschließend wird der Wickelkörper vom Dorn entformt und kann weiter verarbeitet werden.

Die WO 01/13494 A1 offenbart einen Stator mit einem isolierten Wicklungspaket, das den "cogging"-Effekt, der durch die Metallzähne eines konventionellen Stators verursacht wird, verhindert. In der DE 10 2008 060 896 A1 ist eine Tragvorrichtung für Spulen eines Elektromotors mit einer Anzahl von Spulentragkörpern gezeigt, bei der die Spulentragkörper zumindest in der Montageposition unter direkter Anlage von zueinander gekehrten Kanten benaqchbarter innerer Randflächen unmittelbar aneinander liegen. Ferner offenbart die Druckschrift "Soft magnetic composite materialsuse for electrical machines" Einsatzmöglichkeiten für pulvermetallurgische Komponenten im Maqnetkreis einer elektrischen Maschine.

Häufig werden bei den Spulen auch sogenannte segmentierte Statorspulen eingesetzt. Diese finden Verwendung, wenn zu den Anforderungen des hohen Füllfaktors und der damit verbundenen orthozyklischen Wicklung noch eine hohe Windungszahl gefordert ist. Sie können vorzugsweise mit der Flyer-Wickeltechnik als auch mit der Linearwickeltechnik verarbeitet werden.

Typische Ausführungen sind T-Segmente und gesteckte Spulen. Gesteckte Zahnspulen kommen häufig bei einem sternförmigen Statordesign zum Einsatz, bei dem nach der Montage der Spulen ein Joch montiert wird. Innen genutete Vollblechschnitte lassen sich ebenfalls mit gesteckten Zahnspulen versehen. Alternativ werden Polketten verwendet, die die Vorteile der niedrigen Kontaktzahl des nadelbewickelten Vollblechschnittes mit den Füllfaktor-Vorteilen des linearbewickelten Einzelzahnes kombinieren.

Bei einer dreisträngigen, zweipoligen Wicklung eines BLDC-Motors werden bei der Herstellung drei separate Litzen verarbeitet, was die Handhabung sehr aufwändig macht und eine Automatisierung nur mit einem nicht zu rechtfertigenden Aufwand möglich ist. Üblicherweise sind die Wickelkörper derartiger BLDC-Motoren mit Luftspaltwicklung von Hand gefertigt. Aus diesem Grund werden derartige BLDC-Motoren mit Luftspaltwicklung nur für Anwendungen eingesetzt, die nur kleine Stückzahlen erfordern.

Kleine permanentmagneterregte (PM) Synchronmotoren kommen zunehmend bei hochtourigen Antrieben zum Einsatz. Es handelt sich hier zum Beispiel um hochtourige Kompressor-, Schrauber- oder Textilspindelantriebe. Wegen der hohen Stückzahlen unterliegen diese Antriebe einem hohen Kostendruck. Ziel ist es daher ein Motorkonzept zu entwickeln, das eine möglichst einfache und automatisierfähige Fertigungstechnik ermöglicht.

Wegen der hohen Drehzahlen ist eine schlanke "Trommelläuferbauform" wünschenswert, wobei neben den Dauermagneten der Ständer wesentlich die Kosten solcher Antriebe beeinflusst.

Aktuell wird das Ständeraktivteil mit einem Ständerblechpaket ausgeführt, das aus gestanzten Blechen gestapelt und zum Beispiel durch Backlackverklebung paketiert wird. Alternativ dazu ist es auch möglich, Stanzprozess und Paketierung in Form einer so genannten Stanzpaketierung zu kombinieren. Anschließend wird das Ständerblechpaket mit einer Drehfeldwicklung bewickelt, geschaltet und imprägniert. Bei dieser Ausführung liegt die Drehfeldwicklung in den Nuten des Ständerblechpakets und kann als verteilte Wicklung oder als Zahnspulenwicklung ausgeführt sein. Nachteilig ist allerdings die große Menge an Stanzabfall, da die Blechpakete in der Regel aus gestanzten Blechen gebildet werden.

Bei PM Synchronmotoren mit Luftspaltwicklung besteht das Ständerblechpaket lediglich aus einem Ständerjoch und die Drehfeldwicklung liegt als feinverteilte Wicklung direkt zwischen Ständerjoch und Läufer im Luftspalt. Damit dabei kein über das Ständerjoch hinausragender Wickelkopf entsteht, wird die Luftspaltwicklung als so genannte Schrägwicklung ausgeführt. Es bestehen hierfür unterschiedliche Wicklungsvarianten.

Nachteilig bei solchen Schrägwicklungen ist der Umstand, dass das Wicklungsvolumen allerdings nur teilweise an der Drehmomentbildung beteiligt und der daraus resultierende Grundfeld-Wicklungsfaktor in der Größenordnung zwischen 50 und 60 % liegt.

Um diese Nachteile zu vermeiden, sind im Stand der Technik ungeschrägte Mehrschichtwicklungen bekannt, bei denen der Wicklungsaufbau mit Überlappungsbereichen der Stränge im Wickelkopfbereich einhergeht sowie entsprechenden Jochpaket-Überständen, Nachteilig ist hierbei, dass eine kostenintensive und aufwändige Phasenisolierung notwendig wird.

Es ist daher Aufgabe der vorliegenden Erfindung vorbesagte Nachteile zu überwinden und ein Ständeraktivteil für einen Hochgeschwindigkeits-Elektromotor, vorzugsweise eine permanentmagneterregte Synchronmaschine vorzusehen, welches einfach und kostengünstig zu montieren ist sowie ein verbessertes und kostengünstiges Verfahren zum Herstellen eines Ständeraktivteils.

Diese Aufgabe wird durch die Merkmalskombination gemäß Patentanspruch 1 sowie einem Verfahren mit den Merkmalen von Anspruch 6 gelöst.

Zur Lösung der vorgenannten Aufgabe wird vorgeschlagen, ein Ständeraktivteil des PM Synchronmotors aus einem Joch, das im Inneren die Luftspaltwicklung trägt, bereit zu stellen, wobei das Joch aus gesintertem SMC-Werkstoff besteht sowie einem spezifisch geformten Spulenträger, in dessen hohlzylinderförmigen Innenraum ein Rotor antriebswirksam anbringbar ist.

Erfindungsgemäß ist weiter vorgesehen, dass die vorzugsweise 3-strängige Luftspaltwicklung ohne Überlappung im Wickelkopfbereich realisiert ist, indem eine feinverteilte Wicklung in Analogie zur Zahnspulentechnik ausgeführt ist.

Die Luftspaltwicklung in der erfindungsgemäßen Form wird bevorzugt ungeschrägt in das Jochpaket eingebracht und weist im Wickelkopfbereich keine Phasenüberlappungen auf, so dass ein vergleichsweise einfaches Isoliersystem verwendet werden kann. Je nach Ausführungsform können für jeden Strang zwei feinverteilte Spulen verwendet werden.

In einer allgemeinen Ausführung der Erfindung besteht der Ständer aus N Spulen, womit pro Strang beim 3-strängigen Ständer N/3 Spulen verwendet werden, vorliegend jeweils feinverteilte Spulen. Bei beispielsweise N=6 würden zwei feinverteilte Spulen pro Strang verwendet werden.

Im Folgenden wird die Erfindung anhand des zuvor genannten Beispiels mit N=6 und damit N/3=2 feinverteilten Spulen als Spulenpaar näher erläutert, wobei die Erfindung auf andere Spulenanzahlen, so z.B. bei der 3-strängigen Variante auf N = 3, 6, 9, 12,... Spulen anwendbar ist.

Erfindungsgemäß wird demnach ein Ständeraktivteil für einen Hochgeschwindigkeits-Elektromotor, vorzugsweise eine permanenterregte Synchronmaschine bestehend aus einem hohlzylinderförmigen, einen Innenmantel aufweisendem Joch mit einem Aufnahmeraum vorgesehen, in dem ein zylinderförmiger Spulenträger eingeschoben ist, wobei der Spulenträger mehrstückig aus einer Mehrzahl von Spulenhalterungen gebildet wird.

Jede Spulenhalterung ist aus einem ersten und einem zweiten kreisbogenförmigen Teilzylindermantelsegment gebildet, welche jeweils über einen dazwischenliegenden Stegabschnitt einstückig miteinander verbunden sind.

Die ersten (innenliegenden) Teilzylindermantelsegmente bilden einen umfangsgeschlossenen hohlzylinderförmigen inneren Rohrabschnitt zur Aufnahme eines Rotors aus.

In dieser Anordnung spannen die zweiten kreisbogenförmigen Teilzylindermantelsegmente, über den Stegabschnitt mit den ersten Teilzylindermantelsegmenten Rohrabschnitte auf, wobei zwischen je zwei unmittelbar nebeneinander angeordneten Teilzylindermantelsegmenten ein Spalt ausgebildet ist. Die Ausbildung des Spaltes wird dadurch realisiert, dass die zweiten kreisbogenförmigen Teilzylindermantelsegmente in einer Breite ausgebildet sind, dass diese keinen vollständig umfangsgeschlossenen Rohrabschnitt ausbilden) sondern ein offener Spalt in Längsrichtung jeweils zwischen den sich gegenüberliegenden Kanten der Teilzylindermantelsegmente vorhanden ist.

In einer alternativen Ausführungsform der Erfindung ist vorgesehen, dass der Spulenträger mehrteilig aus der Mehrzahl der Spulenhalterungen zu einem zylinderförmigen Spulenträger zusammengesetzt ist, wobei die einzelnen Spulenhalterungen mit Vorteil alle die gleiche Form aufweisen. Das Zusammenfügen der einzelnen Spulenhalterungen zu einem zylinderförmigen Spulenträger kann dabei über herkömmliche Verbindungen erfolgen, wie z. B. einer Nut-Feder oder Schwalbenschwanzverbindung.

Der erste Rohrabschnitt des Spulenträgers bildet mit Vorteil einen inneren Rohrabschnitt mit dem Außenradius R1 aus und der zweite geschlitzte Rohrabschnitt stellt einen um den ersten Rohrabschnitt herum verlaufenden Rohrabschnitt mit einem Außenradius R2 dar, der dem Innenradius des Jochs entspricht. Somit liegen im eingeschobenen Zustand des Spulenträgers die Außenflächen der zweiten d.h. außenliegenden Teilzylindermantelsegmente am Innenmantel des Jochs an.

In einer bevorzugten Ausgestaltung der Erfindung ist vorgesehen, dass sich der jeweilige Stegabschnitt, der die beiden Teilzylindermantelsegmente einer Spulenhalterung verbindet, jeweils radial nach außen erstreckt und weiter bevorzugt in der jeweiligen Mitte der Teilzylindersegmente in Umfangsrichtung betrachtet angeordnet ist. Hierdurch wird eine spiegelsymmetrische Spulenhalterung ausgebildet.

Weiter vorteilhaft ist es, wenn das Joch und/oder der Spulenträger aus SMC-Material ausgebildet sind. Dies kann weiter bevorzugt im Sinterverfahren erfolgen, so dass ein minimaler bis kein Materialabfall entsteht.

Ein weiterer Aspekt der vorliegenden Erfindung betrifft ein Verfahren zum Herstellen eines wie zuvor beschriebenen Ständeraktivteils für einen Motor mit einer Anzahl an P Wicklungssträngen mit den folgenden Schritten
a. Bereitstellen eines hohlzylinderförmigen Jochs mit einem Aufnahmeraum;
b. Bereitstellen eines Spulenträgers, der mehrteilig aus N Spulenhalterungen ausgebildet oder ausbildbar ist, wobei jede Spulenhalterung aus je einem ersten und einem zweiten kreisbogenförmigen Teilzylindermantelsegment gebildet wird, welche über einen dazwischenliegenden Stegabschnitt einstückig miteinander verbunden sind;
c. Bewickeln der N Spulenhalterungen mit je einer feinverteilten Spule von welchen N/P zu jedem der P Wicklungsstränge gehören und
d. Einschieben des Spulenträgers zusammen mit den montierten Spulen in den Aufnahmeraum des Jochs.

In einer bevorzugten Ausführung des Verfahrens bei dem der Spulenträger aus der Mehrzahl der Spulenhalterungen gebildet ist, ist vorgesehen, dass der Wickeldraht jeweils durch einen Spalt zwischen den außen liegenden kreisbogenförmigen Teilzylindermantelsegmenten jeweils unmittelbar benachbarter Spulenhalterungen geführt wird. Aufgrund der gewählten, außen geschlitzten Konstruktion des Spulenträgers, ist eine automatisierte Wicklung mit einer maschinellen Wickelvorrichtung möglich.

In einer alternativen Ausgestaltung, wird der Spulenträger nach dem Bewickeln der Spulenhalterungen im zuvor genannten Schritt c) aus der Mehrzahl der Spulenhalterungen zu einem zylinderförmigen Spulenträger zusammengesetzt.

In einer besonders bevorzugten Ausgestaltung der Erfindung ist vorgesehen, dass die Spulen eines jeden Wicklungsstranges im Wickelkopfbereich ohne Überlappungsbereiche ausgeführt sind.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: eine perspektivische Ansicht eines nicht erfindungsgemäßen ersten Ausführungsbeispiels eines Ständeraktivteils;
- Fig. 2: eine perspektivische Ansicht eines zweiten Ausführungsbeispiels eines Ständeraktivteils;
- Fig. 3: eine schematische Ansicht einer Abwicklung eines Spulenträgers mit Spulen und
- Fig. 4: ein Zonenplan einer 2-poligen Luftspaltwicklung für drei Wicklungsstränge.

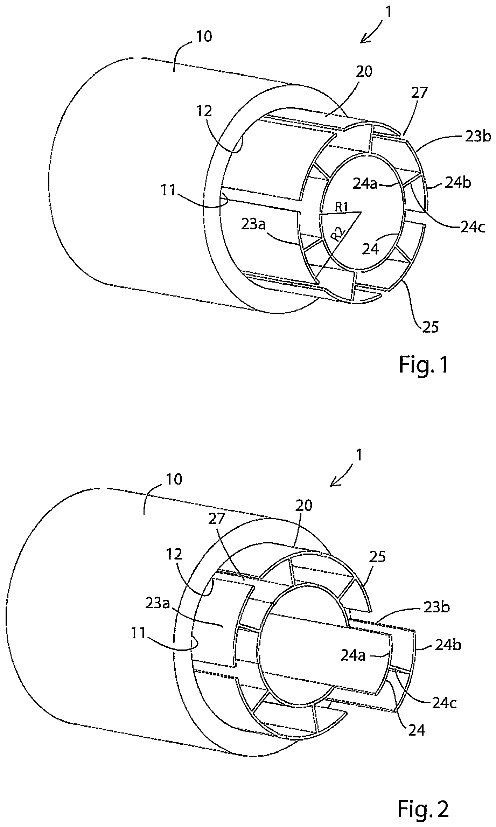

Im Folgenden wird die Erfindung anhand von Ausführungsbeispielen mit Bezug auf die Figuren 1 bis 4 näher beschrieben, wobei gleiche Bezugszeichen auf gleiche funktionale und/oder strukturelle Merkmale hinweisen.

Den Ausführungsbeispielen der Figuren gemeinsam ist ein Ständeraktivteil 1 für einen Elektromotor, vorzugsweise eine permanentmagneterregte Synchronmaschine bestehend aus einem hohlzylinderförmigen Joch 10 mit einem Aufnahmeraum 11. Der Aufnahmeraum 11 wird von einem Innenmantel 12 umgeben.

In den Aufnahmeraum 11 ist ein Spulenträger 20 teilweise eingeschoben dargestellt. Der Spulenträger 20 besteht aus einer Mehrzahl von Spulenhalterungen 23a, 23b, die je aus einem ersten und einem zweiten kreisbogenförmigen Teilzylindermantelsegment 24a, 24b gebildet sind, welche über einen dazwischenliegenden Stegabschnitt 24c einstückig miteinander verbunden sind.

Die jeweils innenliegenden Teilzylindermantelsegmente 24a bilden einen hohlzylinderförmigen Rohrabschnitt 24 zur Aufnahme eines Rotors aus.

Die zweiten kreisbogenförmigen Teilzylindermantelsegmente 24b spannen einen Rohrabschnitt 25 auf, wobei zwischen je zwei unmittelbar nebeneinander angeordneten Teilzylindermantelsegmente 24b einen Spalt 27 ausbildet ist, die dies gut in den Figuren 1 und 2 zu erkennen ist.

In der nicht erfindungsgemäßen Ausführung nach Figur 1 ist der Spulenträger 20 einstückig aus der Mehrzahl der Spulenhalterungen 23a, 23b gebildet.

In der Ausführung nach Figur 2 ist der Spulenträger 20 mehrteilig aus der Mehrzahl der Spulenhalterungen 23a, 23b zu einem zylinderförmigen Spulenträger 20 zusammengesetzt. Die Montage kann durch das Zusammenschieben von benachbarten Spulenhalterungen 23a, 23b mittels einer Nut- und Federverbindung erfolgen.

Die Mehrzahl der Spulenhalterungen 23a, 23b des gezeigent Ausführungsbeispiels mit N=6 und P=3 sind jeweils aus Paaren aus je zwei diametral gegenüberliegenden Spulenhalterungen 23a, 23b ausgebildet, wobei auf jeder Spulenhalterungen 23a, 23b eines Paars aus Spulenhalterungen 23a, 23b jeweils eine feinverteilte in Luftspaltwicklüngstechnik gewickelte Spule 30 eines Wicklungsstrangs aus zwei Spulen 30 montiert ist.

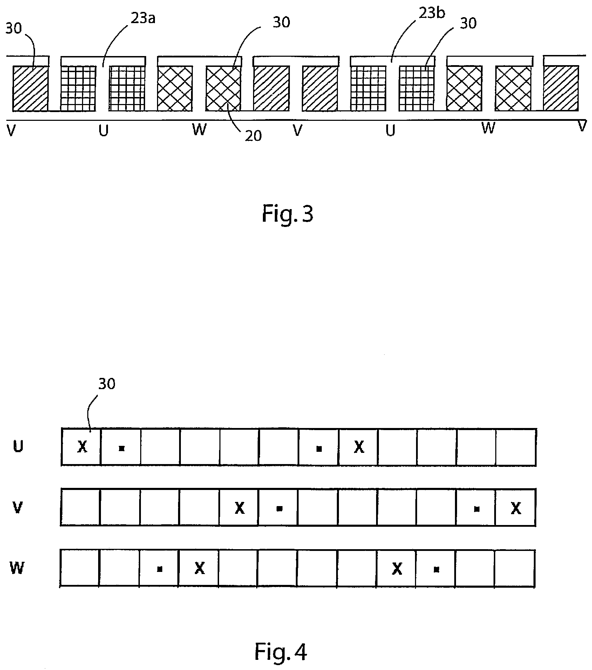

Die jeweiligen Spulen 30 sind um den jeweiligen Stegabschnitt 24c der entsprechenden Spulenhalterung 23a, 23b herum gewickelt, wie dies schematisch in der Figur 3 gezeigt ist.

Auf Paare aus je zwei diametral gegenüberliegende Spulenhalterungen werden jeweils eine feinverteilte in Luftspaltwicklungstechnik gewickelte Spule eines Wicklungsstrangs aus zwei Spulen montiert. Die jeweiligen Spulen werden um den jeweiligen Stegabschnitt der entsprechenden Spulenhalterung herum gewickelt.

In der Fig. 3 ist hierzu eine schematische Ansicht einer Abwicklung eines Spulenträgers 20 mit Spulen 30 für drei Wicklungsstränge U, V, W dargestellt und in der Fig. 4 ein entsprechender Zonenplan einer 2-poligen Luftspaltwicklung für die drei Wicklungsstränge. Die Wicklungsrichtung der Spulen ergibt sich durch die Symbole "X" und "Punkt", wobei der Zonenplan für den gesamten Umfangswinkel von 360° (bzw. 2π) angegeben ist. Wie aus dem Zonenplan zu erkennen ist, sind jeweils zwei Spulen 30 den jeweils diametral gegenüberliegenden Spulenhalterungen 23a, 23b eines Paars aus Spulenhalterungen 23a, 23b zugeordnet.

Die Windungen der Spulen 30 eines jeden Wicklungsstranges U, V, W sind im Wickelkopfbereich auf diese Weise ohne Überlappungsbereiche ausgeführt.

Der erste Rohrabschnitt 24 stellt einen inneren Rohrabschnitt mit dem Außenradius R1 dar.

Der zweite, geschlitzte Rohrabschnitt 25 stellt einen um den ersten Rohrabschnitt 24 herum ausgebildeter Rohrabschnitt mit einem Außenradius R2 dar. Der Innenradius des Jochs 10 entspricht dem Außenradius R2.

Die Herstellung eines Ständeraktivteils 1 gemäß den Figuren 1 und 2 erfolgt im Wesentlichen durch die folgenden Verfahrensschritte:
- Bereitstellen des hohlzylinderförmigen Jochs 10 mit einem Aufnahmeraum 11;
- Bereitstellen eines Spulenträgers 20, der einteilig (wie in Figur 1) oder mehrteilig aus Spulenhalterungen 23a, 23b (wie in Figur 2) ausgebildet oder ausbildbar ist, wobei jede Spulenhalterung aus je aus einem ersten und einem zweiten kreisbogenförmigen Teilzylindermantelsegment 24a, 24b gebildet wird, welche über einen dazwischenliegenden Stegabschnitt 24c einstückig miteinander verbunden sind;
- Bewickeln der Spulenhalterungen mit je einer feinverteilten Spule 30 für jede Motor-Phase U, V, W aus einem Wicklungsstrang eines Wickeldrahtes und
- Einschieben des Spulenträgers 20 zusammen mit den montierten Spulen 30 in den Aufnahmeraum 11 des Jochs 10.

In der Ausführung nach Figur 1 wird der Wickeldraht jeweils durch den Spalt 27 zwischen den kreisbogenförmigen Teilzylindermantelsegmenten 24b benachbarter Spulenträger 20 geführt. In der Ausführung nach Figur 2 erfolgt zunächst das Bewickeln der Spulenhalterungen 23a, 23b mit Spulen 30 und der Spulenträger 20 wird danach aus der Mehrzahl der Spulenhalterungen 23a, 23b zu einem, wie in Figur 2 dargestellten zylinderförmigen Spulenträger 20 zusammengesetzt.

## Patentansprüche

1. Ständeraktivteil (1) für einen Hochgeschwindigkeits-Elektromotor, vorzugsweise eine permanentmagneterregte Synchronmaschine bestehend aus einem hohlzylinderförmigen, einen Innenmantel (12) aufweisendem Joch (10) aus SMC-Material mit einem Aufnahmeraum (11), in dem ein zylinderförmiger mehrteiliger SMC-Spulenträger (20) eingeschoben ist, wobei der SMC-Spulenträger (20) aus einer Mehrzahl von N SMC-Spulenhalterungen (23a, 23b) zusammengesetzt ist, die je aus einem ersten und einem zweiten kreisbogenförmigen Teilzylindermantelsegment (24a, 24b) gebildet sind, welche über einen dazwischenliegenden einzelnen Stegabschnitt (24c) einstückig miteinander verbunden sind, wobei die ersten Teilzylindermantelsegmente (24a) einen umfangsgeschlossenen hohlzylinderförmigen Rohrabschnitt (24) zur Aufnahme eines Rotors ausbilden und wobei die zweiten kreisbogenförmigen Teilzylindermantelsegmente (24b) einen Rohrabschnitt (25) aufspannen, wobei zwischen je zwei unmittelbar nebeneinander angeordneten Teilzylindermantelsegmenten (24b) ein Spalt (27) ausgebildet ist.

2. Ständeraktivteil (1) nach Anspruch 1 **dadurch gekennzeichnet, dass** auf die N Spulenhalterungen (23a, 23b) jeweils eine feinverteilte in Zahnspulentechnik gewickelte Spule (30) montiert ist.

3. Ständeraktivtell (1) nach Anspruch 2, **dadurch gekennzeichnet, dass** die jeweiligen Spulen (30) um den jeweiligen Stegabschnitt (24c) der entsprechenden Spulenhalterung (23a, 23b) herum gewickelt sind.

4. Ständeraktivteil (1) nach einem der vorhergehenden Ansprüche, **dadurch gekennzeichnet, dass** der erste Rohrabschnitt (24) ein innerer Rohrabschnitt (24) mit dem Außenradius R1 und der zweite, geschlitzte Rohrabschnitt (25) ein um den ersten Rohrabschnitt (24) herum ausgebildeter Rohrabschnitt mit einem Außenradius R2 darstellt, der dem Innenradius des Jochs (10) entspricht.

5. Ständeraktivteil (1) nach einem der vorhergehenden Ansprüche, **dadurch gekennzeichnet, dass** sich die Stegabschnitte (24c) jeweils vom inneren Rohrabschnitt (24) radial nach außen zum äußeren Rohrabschnitt (25) erstrecken.

6. Verfahren zum Herstellen eines Ständeraktivteils (1) nach einem der Ansprüche 1 bis 5 mit den folgenden Schritten:
a. Bereitstellen eines hohlzylinderförmigen Jochs (10) aus einem SMC-Material mit einem Aufnahmeraum (11);
b. Bereitstellen eines Spulenträgers (20), der mehrteilig aus einer Mehrzahl von N Spulenhalterungen (23a, 23b) zusammengesetzt ist, wobei jede Spulenhalterung aus einem SMC-Material besteht und aus einem ersten und einem zweiten kreisbogenförmigen Teilzylindermantelsegment (24a, 24b) gebildet wird, welche über einen dazwischenliegenden Stegabschnitt (24c) einstückig miteinander verbunden sind;
c. Bewickeln der SMC-Spulenhalterungen mit je einer feinverteilten Spule (30) für jede Motor-Phase (U, V, W) aus einem Wicklungsstrang eines Wickeldrahtes und
d. Einschieben des SMC-Spulenträgers (20) zusammen mit den montierten Spulen (30) in den Aufnahmeraum (11) des SMC-Jochs (10).

7. VerFahren nach Anspruch 6, wobei der SMC-Spulenträger (20) aus der Mehrzahl der Spulenhalterungen (23a, 23b) gebildet ist und der Wickeldraht jeweils durch einen Spalt (27) zwischen den zweiten kreisbogenförmigen Teilzylindermantelsegment (24b) benachbarter den Spulenträger (20) ausbildenden Spulenhalterungen (23a, 23b) geführt wird.

8. Verfahren nach Anspruch 7, wobei der Spulenträger (20) nach dem Bewickeln in Schritt c) aus der Mehrzahl der Spulenhalterungen (23a, 23b) zu einem zylinderförmigen Spulenträger (20) zusammengesetzt wird.

## Claims

1. A stator active part (1) for a high-speed electric motor, preferably a permanent-magnet excited synchronous machine, consisting of a hollow cylinder-shaped yoke (10) having an inner shell (12) made from SMC material with a receiving space (11), in which a cylinder-shaped multipart SMC coil carrier (20) is inserted, the SMC coil carrier (20) being assembled from a plurality of N SMC coil holders (23a, 23b), which are each formed from first and second arcuate partial cylinder shell segments (24a, 24b) integrally connected to each other via an intermediate single web portion (24c), the first partial cylinder shell segments (24a) forming a circumferentially closed hollow cylinder-shaped pipe section (24) for receiving a rotor and the second arcuate partial cylinder shell segments (24b) spanning a pipe section (25), wherein a gap (27) is formed between two partial cylinder shell segments (24b) arranged immediately adjacent to each other.

2. The stator active part (1) according to claim 1, **characterized in that** a finely distributed coil (30) wound in a tooth coil technique is mounted to each of the N coil holders (23a, 23b).

3. The stator active part (1) according to claim 2, **characterized in that** the respective coils (30) are wound around the respective web portion (24c) of the corresponding coil holder (23a, 23b).

4. The stator active part (1) according to any of the preceding claims, **characterized in that** the first pipe section (24) represents an inner pipe section (24) with an outer radius R1 and the second, slotted pipe section (25) represents a pipe section formed around the first pipe section (24) with an outer radius R2 corresponding to the inner radius of the yoke (10).

5. The stator active part (1) according to any of the preceding claims, **characterized in that** each of the web portions (24c) radially extends from the inner pipe section (24) to the outer pipe section (25).

6. A method for manufacturing a stator active part (1) according to any of the claims 1 to 5 with the following steps:
a. providing a hollow cylinder-shaped yoke (10) made from an SMC material with a receiving space (11);
b. providing a coil carrier (20) assembled in several parts from a plurality of N coil holders (23a, 23b), each coil holder consisting of an SMC material and being formed from first and second arcuate partial cylinder shell segments (24a, 24b) integrally connected to each other via an intermediate web portion (24c);
c. winding the SMC coil holders with a finely distributed coil (30) each for every motor phase (U, V, W) from a winding strand of a winding wire; and
d. inserting the SMC coil carrier (20) together with the assembled coils (30) into the receiving space (11) of the SMC yoke (10).

7. The method according to claim 6, wherein the SMC coil carrier (20) is formed from the plurality of coil holders (23a, 23b) and the winding wire is routed through a gap (27) each between the coil holders (23a, 23b) adjacent to the second arcuate partial cylinder shell segments (24b) forming the coil carrier (20).

8. The method according to claim 7, wherein after the winding in step c), the coil carrier (20) is assembled to a cylinder-shaped coil carrier (20) from the plurality of coil holders (23a, 23b).

## Revendications

1. Partie active de stator (1) pour un moteurs électrique à vitesse élevée, de préférence une machine synchrone excitée par aimant permanent constituée d'une culasse (10) en forme de cylindre creux présentant une enveloppe intérieure (12) en matériau SMC avec un espace de réception (11), dans lequel un support de bobine SMC (20) cylindrique à plusieurs parties est inséré, dans laquelle le support de bobine SMC (20) se compose d'une pluralité de N fixations de bobine SMC (23a, 23b), qui sont formées respectivement d'un premier et d'un deuxième segment d'enveloppe partiellement cylindrique (24a, 24b) en forme d'arc de cercle, lesquels sont reliés l'un à l'autre d'un seul tenant par le biais d'une seule section de traverse (24c) intermédiaire, dans laquelle les premiers segments d'enveloppe partiellement cylindriques (24a) forment une section de tube (24) en forme de cylindre creux à circonférence fermée pour la réception d'un rotor et dans laquelle les deuxièmes segments d'enveloppe partiellement cylindriques (24b) en forme d'arc de cercle couvrent une section de tube (25), dans laquelle un espace (27) est formé entre respectivement deux segments d'enveloppe partiellement cylindriques (24b) agencés directement l'un à côté de l'autre.

2. Partie active de stator (1) selon la revendication 1, **caractérisée en ce que** respectivement une bobine (30) finement divisée enroulée selon la technique de bobine de dent est montée entre les N fixations de bobine (23a, 23b).

3. Partie active de stator (1) selon la revendication 2, **caractérisée en ce que** les bobines (30) respectives sont enroulées autour de la section de traverse (24c) respective de la fixation de bobine correspondante (23a, 23b).

4. Partie active de stator (1) selon l'une quelconque des revendications précédentes, **caractérisée en ce que** la première section de tube (24) représente une section de tube intérieure (24) avec un rayon extérieur R1 et la deuxième section de tube (25) fendue représente une section de tube réalisée autour de la première section de tube (24) avec un rayon extérieur R2, qui correspond au rayon intérieur de la culasse (10).

5. Partie active de stator (1) selon l'une quelconque des revendications précédentes, **caractérisée en ce que** les sections de traverse (24c) s'étendent respectivement de la section de tube intérieure (24) radialement vers l'extérieur vers la section de tube extérieure (25).

6. Procédé de fabrication d'une partie active de stator (1) selon l'une quelconque des revendications 1 à 5 avec les étapes suivantes :
a. mise à disposition d'une culasse (10) en forme de cylindre creux en un matériau SMC avec un espace de réception (11) ;
b. mise à disposition d'un support de bobine (20), qui se compose de plusieurs parties d'une pluralité de N fixations de bobine (23a, 23b), dans lequel chaque fixation de bobine est constituée d'un matériau SMC et est formée d'un premier et d'un deuxième segment d'enveloppe partiellement cylindrique (24a, 24b) en forme d'arc de cercle, lesquels sont reliés l'un à l'autre d'un seul tenant par le biais d'une section de traverse (24c) intermédiaire,
c. enroulement des fixations de bobine SMC avec respectivement une bobine (30) finement divisée pour chaque phase moteur (U, V, W) à partir d'un brin d'enroulement d'un fil de bobinage et
d. insertion du support de bobine SMC (20) conjointement avec les bobines montées (30) dans l'espace de réception (11) de la culasse SMC (10).

7. Procédé selon la revendication 6, dans lequel le support de bobine SMC (20) est formé de la pluralité de fixations de bobine (23a, 23b) et le fil de bobinage est guidé respectivement à travers un espace (27) entre les deuxièmes segments d'enveloppe partiellement cylindriques (24b) en forme d'arc de cercle de fixations de bobine (23a, 23b) adjacentes formant le support de bobine (20).

8. Procédé selon la revendication 7, dans lequel le support de bobine (20) se compose après l'enroulement dans l'étape c) de la pluralité de fixations de bobines (23a, 23b) en un support de bobine (20) cylindrique.
